# EUROPÄISCHE PATENTSCHRIFT

(11) **EP 3 401 821 B1**
(45) Veröffentlichungstag und Bekanntmachung des Hinweises auf die Patenterteilung: **29.07.2026**
(21) Anmeldenummer: 18171098.9
(22) Anmeldetag: 07.05.2018
(51) Int. Cl.: G06F 21/31, G06F 21/34, H04L 9/40

(54) **VERFAHREN UND DATENVERARBEITUNGSSYSTEM ZUM BEREITSTELLEN UND ZUM NUTZEN EINER SESSION-PIN FÜR EINEN SICHERHEITSKRITISCHEN PROZESS ZUM AUTHENTISIEREN EINES BENUTZERS UND / ODER EINES DATENOBJEKTS**
METHOD AND DATA PROCESSING SYSTEM FOR PROVIDING AND USING A SESSION PIN FOR A SECURITY-CRITICAL PROCESS FOR AUTHENTICATING A USER AND/OR A DATA OBJECT
PROCÉDÉ ET SYSTÈME DE TRAITEMENT DE DONNÉES PERMETTANT DE FOURNIR ET D'UTILISER UNE SESSION PIN POUR UN PROCESSUS D'AUTHENTIFICATION D'UN UTILISATEUR ET/OU OBJET DE DONNÉES CRITIQUE EN TERMES DE SÉCURITÉ

(30) Priorität: 08.05.2017 DE 102017109832
(43) Veröffentlichungstag der Anmeldung: 14.11.2018
(73) Patentinhaber: Bundesdruckerei GmbH, 10969 Berlin (DE)
(72) Erfinder: Schwan, Dr. Matthias, 10969 Berlin (DE); Möller, Stefan, 10969 Berlin (DE); Müller, Frank, 10969 Berlin (DE); Wirth, Dr. Klaus Dieter, 10969 Berlin (DE); Ethen, Markus, 10969 Berlin (DE); Tesche, Markus, 10969 Berlin (DE)
(74) Vertreter: Bittner, Thomas L.

(56) Entgegenhaltungen:
- EP-A1- 1 773 018
- WO-A1-2016/146726
- US-A1- 2008 098 464
- ANONYMOUS: "BSI TR-03110 Advanced Security Mechanisms for Machine Readable Travel Documents", 20 March 2012 (2012-03-20), XP055029789, Retrieved from the Internet <URL:https://www.bsi.bund.de/ContentBSI/Publikationen/TechnischeRichtlinien/tr03110/index_htm.html> [retrieved on 20120613]
- MICROSOFT: "Developer guide", 26 April 2017 (2017-04-26), XP055506811, Retrieved from the Internet <URL:https://opdhsblobprod02.blob.core.windows.net/contents/3db05d86db4f4317a4832cd7160dc912/ec21cad5296c3179f168800a9c5489bb?sv=2015-04-05&sr=b&sig=8CnIKOcpZk92BU5ETERLIhvXDv8du2u7TOLBgWDXI9c=&st=2018-09-13T08:14:13Z&se=2018-09-14T08:24:13Z&sp=r> [retrieved on 20180913]
- ARCHIVED: "Smart Card Enhancements", 28 February 2010 (2010-02-28), XP055506761, Retrieved from the Internet <URL:https://docs.microsoft.com> [retrieved on 20180913]
- BSI: "Advanced Security Mechanisms for Machine Readable Travel Documents and eIDAS Token – Part 2: Protocols for electronic IDentification, Authentication and trust Services (eIDAS) (Version 2.21)", TECHNICAL GUIDELINE, vol. TR-03110-2, 21 December 2016 (2016-12-21), pages 1 - 36, XP055362786, Retrieved from the Internet <URL:https://www.bsi.bund.de/SharedDocs/Downloads/EN/BSI/Publications/TechGuidelines/TR03110/BSI_TR-03110_Part-2-V2_2.pdf?__blob=publicationFile&v=3> [retrieved on 20170407]

## Beschreibung

Die Erfindung betrifft ein Verfahren und ein Datenverarbeitungssystem zum Bereitstellen und zum Nutzen einer Session-PIN für einen sicherheitskritischen Prozess zum Authentisieren eines Benutzers und / oder eines Datenobjekts beim Ausführen einer Software-Applikation in einer Betriebssystemumgebung.

### Hintergrund

Betriebssystemumgebungen stellen Mittel für die vertrauliche und integritätsgeschützte Datenkommunikation zu Verfügung. So bietet zum Beispiel das Windows-Betriebssystem für die vertrauliche und integritätsgeschützte Kommunikation über ein Intranet oder das Internet sowie für die Authentisierung von Benutzern und Objekten mehrere Mechanismen an. Hierzu gehören beispielweise das Benutzer-Login, eine sichere Email-Kommunikation über Outlook-S/MIME, eine SSL/TLS Authentisierung über den Internet Explorer oder andere Browser oder ein Remote-Login über ein VPN (Virtuelles Privates Netzwerk) in ein gesichertes Netzwerk. In der Regel liegen Mechanismen der asymmetrischen Kryptografie und einer Public-Key Infrastruktur (PKI) zu Grunde. Die hierbei benötigten privaten Schlüssel können in einem Software-Token gespeichert und durch das Windows-Betriebssystem verwaltet werden oder in einem Hardware-Token, wie einer Chipkarte, gespeichert und durch das Chipkartenbetriebssystem verwaltet werden. Die Integration derartiger Hardware-Token inklusive Lesegeräte erfolgt im Windows-Betriebssystem über die PC/SC Schnittstelle, "Cryptographic Service Provider" oder Minidriver, letztere auch Middleware genannt.

Die sicherheitskritischen Prozesse im Windows-Betriebssystem zur Authentisierung von Benutzern und Objekten mittels PKI-basierten Hardware-Token, zum Beispiel das Benutzer-Login mit einer Chipkarte, können systembedingt vom Anwender oder Administrator nicht angepasst oder ersetzt werden. Diese Windows-Prozesse verlangen zwingend die Verarbeitung einer Nutzer-PIN (PIN - Persönliche Identifikations-Nummer) für die Verifikation durch die Chipkarte. Im Falle der Nutzung einer Chipkarte mit integriertem PIN-Pad, eines Chipkartenterminals mit integriertem PIN-Pad oder der Nutzung biometrischer Authentisierungsmethoden ist die Eingabe der Nutzer-PIN über die Tastatur des Rechners zur direkten Verarbeitung durch den Windows-Prozess (in der Betriebssystemumgebung installierte Software-Applikation) nicht vorgesehen. Darüber hinaus würde die unverschlüsselte Übertragung einer über die Tastatur eingegebenen Nutzer-PIN zu einer kontaktlosen Chipkarte die Möglichkeit des unerlaubten Abgreifens dieser Nutzer-PIN bieten.

Das Betriebssystem Windows sieht zur Lösung das sogenannte "Windows- Session-PIN Verfahren" vor (vgl. Smart Card Enhancements, Microsoft Technet (Februar 2010), URL: https://technet.microsoft.com/de-de/library/ff404304(v=ws.10).aspx). Hierzu wird zunächst in einem vorgelagerten Prozess eine Nutzer-PIN spezifisch für die Chipkarte und das Nutzerterminal durch die Chipkarte verifiziert. Bei erfolgreicher Verifikation der Nutzer-PIN wird durch die Chipkarte oder Middleware eine Session-PIN generiert und sowohl in der Chipkarte gespeichert als auch an die Software-Applikation, zum Beispiel das Benutzer-Login, übergeben. Dieser Prozess kann nun konform zum Betriebssystem die Session-PIN an die Chipkarte senden und bei erfolgreicher Verifikation durch die Chipkarte die notwendigen kryptografischen Operationen durchführen, wie das Senden und das Verifizieren einer Challenge im Rahmen eines Challenge-Response-Protokolls.

Das Dokument US 2008 / 0 098 464 A1 offenbart ein Verfahren, in dem die Erkennung zufälliger teilweise gemeinsamer Geheimnisse (shared secret) verbunden ist mit der Verwendung von mehr als einem Kommunikationskanal zwischen serverseitigen Ressourcen und zwei logischen oder physikalischen clientseitigen Datenverarbeitungsgeräten. Nach einer ersten Sicherheitsstufe wird ein erster Kommunikationskanal zu einer ersten Datenverarbeitungsmaschine auf der Client-Seite geöffnet. Die Sitzung wird fortgesetzt, indem eine Authentifizierungsaufforderung (Challenge), die eine zufällige Teilmenge eines Authentifizierungsnachweises identifiziert, an eine zweite Datenverarbeitungsmaschine auf der Client-Seite unter Verwendung eines zweiten Kommunikationskanals übermittelt wird. Anschließend gibt der Benutzer eine Authentifizierungsantwort (Response) in der ersten Datenverarbeitungsmaschine basierend auf einer zufälligen Teilmenge des Authentifizierungsnachweises ein. Die Authentifizierungsantwort wird auf dem ersten Kommunikationskanal zum Abgleich an die Serverseite zurückgegeben. Der Authentifizierungsnachweis kann ein Berechtigungsnachweis, der für eine Sitzung an den Benutzer geliefert wird, für nur eine Sitzung sein oder ein statischer Berechtigungsnachweis, der mehrmals verwendet wird.

Das Dokument WO 2016 / 146726 A1 betrifft ein Verfahren zur Erzeugung eines Zertifikats für einen Sicherheitstoken eines Nutzers durch einen ID-Token desselben Nutzers.

Das Dokument EP 1 773 018 A1 beschreibt ein Verfahren zum Authentifizieren eines Benutzers, der auf einen Server zugreift, insbesondere ein Verfahren zum Authentifizieren eines Benutzers unter Verwendung eines Kommunikationsterminals, um über ein Telekommunikationsnetz auf den Server zuzugreifen.

Das Dokument XP055506811, "Developer Guidelines" von Microsoft, offenbart eine Entwicklerrichtlinie für Smart Card Erweiterungen für die Windows Session PIN.

### Zusammenfassung

Aufgabe der Erfindung ist es, ein Verfahren und ein Datenverarbeitungssystem zum Bereitstellen und zum Nutzen einer Session-PIN für einen sicherheitskritischen Prozess zum Authentisieren eines Benutzers und / oder eines Datenobjekts beim Ausführen einer Software-Applikation in einer Betriebssystemumgebung in einem System anzugeben, mit denen das Bereitstellen und Verifizieren der Session-PIN verbessert wird, insbesondere zum Absichern drahtloser Datenkommunikation und / oder mit biometrischer Nutzerauthentifizierung.

Zur Lösung sind ein Verfahren und ein Datenverarbeitungssystem zum Bereitstellen und zum Nutzen einer Session-PIN für einen sicherheitskritischen Prozess zum Authentisieren eines Benutzers und / oder eines Datenobjekts beim Ausführen einer Software-Applikation in einer Betriebssystemumgebung nach den Ansprüchen 1 und 7 geschaffen. Alternative Ausgestaltungen sind Gegenstand abhängiger Unteransprüche.

Mittels des Verfahrens ist eine sichere und datenschutzfreundliche Verwendung von Hardware-Token einer Public-Key-Infrastruktur in Systemen mit einer drahtlosen Datenkommunikation unterstützt.

Der Hardware-Token ist Teil einer Public-Key-Infrastruktur (PKI), also eines Systems, das digitale Zertifikate ausstellen, verteilen und prüfen kann. Die innerhalb der PKI ausgestellten Zertifikate werden zur Absicherung von Datenkommunikationen verwendet. Es findet ein asymmetrisches Kryptosystem Anwendung, mithilfe dessen Nachrichten in dem System digital signiert und verschlüsselt werden können. In dem asymmetrischen Kryptosystem verfügt der Sender über den öffentlichen Schlüssel des Empfängers für eine verschlüsselte Übermittlung von Daten und Nachrichten.

Bei der Betriebssystemumgebung kann es sich beispielsweise um eine Windows-Umgebung handeln.

Das Empfangen der Authentisierungsdaten des Nutzers über die Eingabeeinrichtung kann weiterhin wenigstens einen der folgenden Schritte umfassen: Erfassen der Authentisierungsdaten über eine Tastatur und / oder einen biometrischen Sensor des Nutzerterminals, Erfassen der Authentisierungsdaten über eine Tastatur und / oder einen biometrischen Sensor eines Lesegeräts, welches dem Hardware-Token zugeordnet ist, Erfassen der Authentisierungsdaten über ein PIN-Pad und / oder einen biometrischen Sensor des Hardware-Tokens, und Erfassen der Authentisierungsdaten über eine Tastatur und / oder einen biometrischen Sensor eines mobilen Geräts.

Die Session-PIN kann durch das Nutzerterminal und / oder den Hardware-Token erzeugt werden.

Die Session-PIN wird beim Verwenden verifiziert, und das Verifizieren umfasst in Verbindung mit dem Erzeugungsprozess a) weiterhin das Verifizieren der Session-PIN über einen Schlüsselableitungs- und Schlüsselaustauschalgorithmus mit abgeleiteten Sitzungsschlüsseln für Secure Messaging nach ISO / IEC 7816-4 durch den Hardware-Token.

Das Verifizieren der Session-PIN umfasst aus Sicht der Software-Applikation in der Betriebssystemumgebung folgende Schritte: Ausführen des Password Authenticated Connection Establishment-Protokolls mit der Session-PIN als Startwert und Ableiten neuer Secure Messaging Schlüssel und Send Sequence Counter (SSC), und Senden von Authentifizierungsdaten, wobei die Session-PIN im Zustand "verifiziert" ist und die Kommunikation gesichert und autorisiert durch Secure Messaging erfolgt. Das Senden der Authentifizierungsdaten kann mittels einer Challenge in einem Challenge-Response-Protokoll ausgeführt werden. Die Sicherung der Kommunikation mittels Secure Messaging kann die Nutzung des Kommandos "Perform Security Operation" mai ISO/IEC 7816-4 umfassen.

Die Session-PIN wird beim Verwenden verifiziert, und das Verifizieren in Verbindung mit dem Erzeugungsprozess b) aus Sicht der Software-Applikation in der Betriebssystemumgebung weiterhin Folgendes umfassen: Anfordern einer Zufallszahl von dem Hardware-Token; Empfangen und Verschlüsseln der Zufallszahl mit einem symmetrischen Schlüssel der Session PIN durch die Software-Applikation; Senden der verschlüsselten Zufallszahl an den Hardware-Token; Entschlüsseln der verschlüsselten Zufallszahl mit dem symmetrischen Schlüssel der Session PIN in dem Hardware-Token; Ableiten von Secure Messaging Schlüsseln und Send Sequence Counter (SSC), wenn die Zufallszahl durch den Hardware-Token verifiziert wurde; und Senden von Authentifizierungsdaten, wobei die Session PIN verifiziert und die Kommunikation mittels Secure Messaging gesichert und autorisiert sind. Das Anfordern der Zufallszahl kann in einer Ausführung zum Beispiel mittels des Befehls "Get Challenge" oder eines Befehls ähnlicher Funktionalität ausgeführt werden. In Verbindung mit dem Verschlüsseln der Zufallszahlen und dem Senden der Zufallszahlen an den Hardware-Token kann die Nutzung des Kommandos "Mutual Authenticate" oder eines Befehls ähnlicher Funktionalität vorgesehen sein. Das Senden der Authentifizierungsdaten kann mittels einer Challenge in einem Challenge-Response-Protokoll ausgeführt werden. Die
Sicherung der Kommunikation mittels Secure Messaging kann die Nutzung des Kommandos "Perform Security Operation" umfassen, insbesondere nach ISO / IEC 7816-4.

Die Session-PIN wird beim Verwenden verifiziert, und das Verifizieren kann in Verbindung mit dem Erzeugungsprozess c) aus Sicht der Software-Applikation in der Betriebssystemumgebung weiterhin Folgendes umfassen: Senden von Authentifizierungsdaten, wobei die Session-PIN verifiziert und die Kommunikation mittels Secure Messaging gesichert und autorisiert sind. Beim Senden der Authentifizierungsdaten kann eine Challenge in einem Challenge-Response-Protokoll verwendet werden. Es kann vorgesehen sein, dass der symmetrische Schlüssel für eine Verschlüsselung genutzt wird. Der symmetrische Schlüssel kann für die MAC-Authentisierung verwendet werden. Optional kann der Send Sequence Counter (SSC) als Session-PIN eingesetzt werden. Für die Session-PIN kann der SSC des Secure Messaging von dem Hardware-Token nicht ausgewertet werden.

Als Hardware-Token kann eine Chipkarte verwendet werden. Das dem Hardware-Token zugeordnete Lesegerät kann in diesem Fall ein Chipkarten-Lesegerät sein. Es kann vorgesehen sein, dass die Chipkarte über ein PIN-Pad und / oder einen biometrischen Sensor verfügt. Alternativ oder ergänzend kann der biometrische Sensor in das Chipkarten-Lesegerät integriert sein.

Das Verwenden der Session-PIN umfasst einen sicherheitskritischen Prozess zum Authentisieren eines Benutzers und / oder eines Datenobjekts aus der folgenden Gruppe: Nutzer-Log-in Prozess und Anmeldung bei einem Web-Dienst.

Mittels der Technologien kann vermieden werden, dass die Authentisierungsdaten des Nutzers oder Teile hiervon, beispielweise eine persönlichen PIN (Nutzer-PIN), über eine drahtlose Kommunikationsverbindung übermittelt werden. "Stellvertretend" kommt mit vergleichbarer Funktionalität bzw. gleicher Wertigkeit die Session-PIN zum Einsatz. Mit dem Erzeugen der Session-PIN wird der private Schlüssel des Nutzers auf dem Hardware-Token "freigeschaltet".

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einem als Chipkarte ausgeführten Hardware-Token, einem Chipkarten-Lesegerät und einem Nutzerterminal;
- Fig. 2: eine schematische Darstellung für einen bekannten Login-Prozess unter Verwendung der Chipkarte, wobei eine Nutzer-PIN über eine Tastatur des Nutzerterminals eingegeben wird;
- Fig. 3: eine schematische Darstellung für einen Login-Prozess mittels eines als Chipkarte ausgeführten Hardware-Tokens, wobei eine Nutzer-PIN über ein PIN-Pad der Chipkarte eingegeben wird;
- Fig. 4: eine schematische Darstellung für den Ablauf zum Erzeugen einer Session-PIN;
- Fig. 5: eine schematische Darstellung für einen alternativen Ablauf zum Erzeugen einer Session-PIN; und
- Fig. 6: eine schematische Darstellung zu einem anderen Ablauf zum Erzeugen einer Session-PIN.

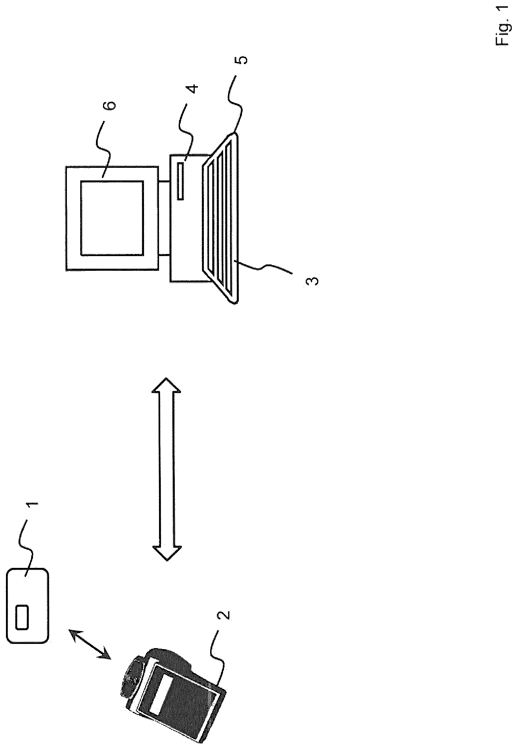

Fig. 1 zeigt eine schematische Darstellung einer Anordnung mit einem als Chipkarte ausgeführten Hardware-Token 1, einem Lesegerät 2 für die Chipkarte und einem Nutzerterminal 3, auf dem eine Betriebssystemumgebung bereitgestellt ist, in welcher software-Applikationen laufen können, nachdem diese installiert wurden, insbesondere auf dem Nutzerterminal 3. Das Nutzerterminal 3 weist einen Personalcomputer 4 mit zugeordnetem Bildschirm 6 und Tastatur 5 auf. Mittels des Lesegeräts 2 ist die Chipkarte zumindest lesbar. Alternativ kann vorgesehen sein, dass das Lesegerät auch eingerichtet ist, Daten auf die Chipkarte zu schreiben.

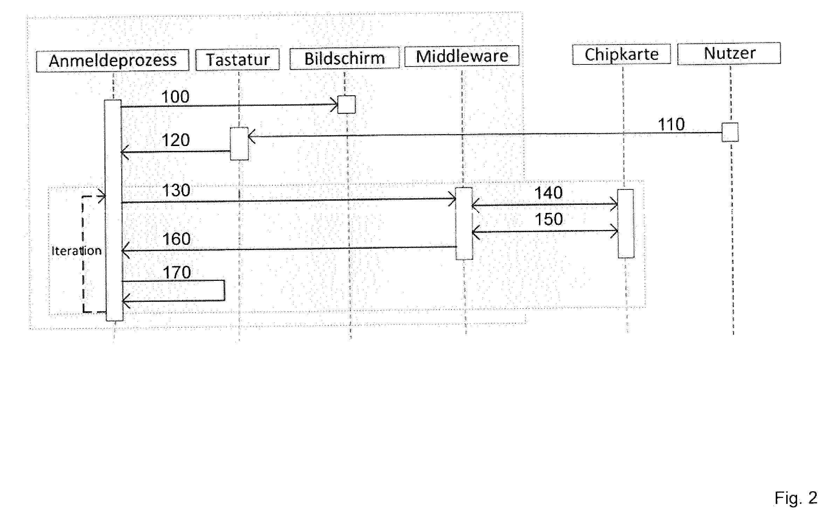

Fig. 2 zeigt eine schematische Darstellung für einen bekannten Login- oder Logon-Prozess (Anmeldeprozess) mittels des als (kontaktbehaftete) Chipkarte ausgeführten Hardware-Tokens 1, wobei eine einem Nutzer zugeordnete PIN (Persönliche Identifikations-Nummer) in Form einer persönlichen Identifikationsnummer oder Geheimzahl über die Tastatur 5 eingegeben wird. Bei dem Login-Prozess wird der Anmeldeprozess über eine Software-Applikation auf dem Nutzerterminal 3 mit zugeordneter Betriebsumgebung durchgeführt, beispielsweise eine Windows-Betriebsumgebung.

Im Schritt 100 wird der Nutzer aufgefordert seinen Nutzer-PIN einzugeben, was durch den Nutzer im Schritt 110 erfolgt, indem die PIN über die Tastatur 5 des Nutzerterminals 3 eingegeben wird. Im Schritt 120 erfolgt die Übergabe der Nutzer-PIN von der Tastatur 6 an die Software-Applikation für den Anmeldeprozess. Danach wird die empfangene PIN in den Schritten 130 bis 170 mittels des als Chipkarte ausgeführten Hardware-Tokens 1 verifiziert. Hierzu wird die PIN im Schritt 130 an eine in der Betriebsumgebung bereitgestellte Middleware übergeben, worauf in den Schritten 140 und 150 eine Verifizierung der PIN durch die Chipkarte erfolgt, für die die Datenkommunikation über das Lesegerät 2 erfolgt. Eine von der Chipkarte erzeugte Antwort (Response) wird im Schritt 160 von der Middleware an die Software-Applikation des Anmeldeprozesses übergeben, worauf im Schritt 170 die Antwort verifiziert wird. Im Anschluss an diese Authentisieren können dann in diesem bekannten System sicherheitskritische Prozesse in der bereitgestellten Betriebssystemumgebung ausgeführt werden.

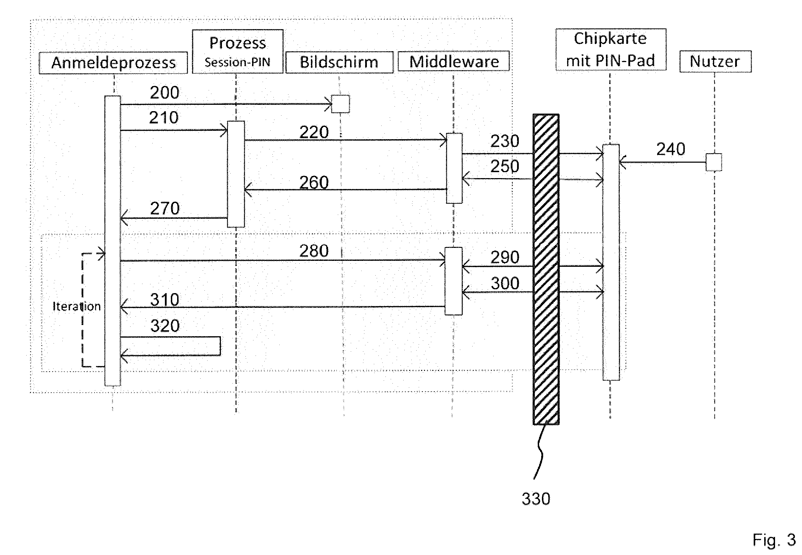

Fig. 3 zeigt eine schematische Darstellung für einen Login-Prozess (Anmeldeprozess) für den Fall, dass die hierbei stattfindende Datenkommunikation in dem System mit der Betriebssystemumgebung eine drahtlose Kommunikation unter Beteiligung des als Chipkarte ausgeführten Hardware-Tokens 1 umfasst und die Nutzer-PIN nicht über die Tastatur 6 des Nutzerterminals 3 übergeben wird. Im Schritt 200 erfolgt eine Aufforderung für den Nutzer, in dem eine entsprechende Nachricht auf dem Bildschirm 5 ausgegeben wird. Es wird dann im Schritt 210 ein Prozess zum Erzeugen einer Session-PIN gestartet. Die Aufforderung zum Generieren der Session-PIN wird im Schritt 220 an die Middleware übergeben, worauf im Schritt 230 eine PIN-Verifikation gestartet wird. Im Schritt 240 wird eine Nutzer-PIN des Nutzers über ein PIN-Pad der Chipkarte empfangen. Alternativ kann die PIN-Eingabe über eine Tastatur des Lesegeräts 2 und / oder einen biometrischen Sensor erfolgen. Die Nutzer-PIN-Eingabe kann alternativ auch über ein mobiles Gerät des Nutzers erfolgen, beispielsweise ein Mobilfunkgerät. Über die Schritte 250 bis 270 wird die Session-PIN über die Middleware an die Software-Applikation "Anmeldeprozess" übergeben.

Es schließen sich dann die Schritte 280 bis 320 an, die den Schritten 130 bis 170 in Fig. 1 entsprechen.

Das Ausführen der Software-Applikation "Anmeldeprozess" gemäß Fig. 3 schließt eine drahtlose Datenkommunikation 330 zur Chipkarte ein.

Die Eingabe der Nutzer-PIN über die Tastatur 6 des Nutzerterminals 3 zur direkten Verarbeitung durch die Software-Applikation in der Betriebssystemumgebung würde zur unverschlüsselten Übertragung der über die Tastatur 6 empfangen Nutzer-PIN führen. Daher sind alternative Verfahren zum Erzeugen und Verifizieren der Session-PIN vorgeschlagen, die nachfolgend näher erläutert werden.

Bei den alternativen Ausgestaltungen kann als anfänglicher Schritt jeweils vorgesehen sein, dass die Software-Applikation, zum Beispiel ein Windows-Prozess, eine Authentisierung des Nutzers über die Chipkarte des Nutzers startet. Der Nutzer wird aufgefordert, seine geheime PIN oder biometrischen Merkmale (i) über die Tastatur 5 seines Nutzerterminals 3 oder einen biometrischen Sensor, (ii) über ein PIN-Pad oder einen biometrischen Sensor an dem Lesegerät 2, welches Teil eines Kartenterminal sein kann, (iii) über ein PIN-Pad oder biometrischen Sensor integriert in den Kartenkörper der Chipkarte oder (iv) über ein PIN-Pad oder einen biometrischen Sensor eines Smartphones oder Mobilgeräts zu präsentieren. Bei erfolgreicher Verifikation der Nutzerauthentisierungsdaten wird entweder durch das Terminal 3 oder durch den als Chipkarte ausgeführten Hardware-Token 1 die Session-PIN nach einer der nachfolgend beschriebenen Ausführungsbeispielen generiert und entweder der Chipkarte oder dem Nutzerterminal 3 für spätere Authentisierungen von Benutzern und / oder Datenobjekten übergeben.

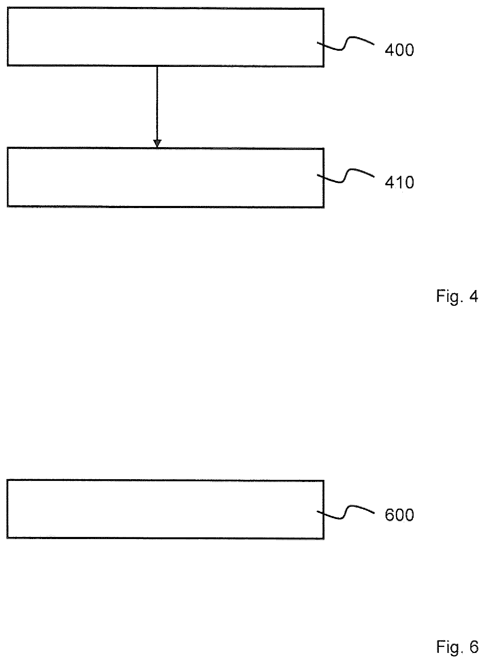

Bei einem Ausführungsbeispiel wird die Session-PIN als ein alphanumerischer Wert erzeugt, der über das PACE Protokoll (PACE - "Password Authenticated Connection Establishment") verifiziert werden kann (vergleiche zum Beispiel BSI TR-03110). Hierfür wird die Session-PIN nicht in einem 1:1 Vergleich von der Chipkarte verifiziert, sondern über einen Schlüsselableitungs- und Schlüsselaustauschalgorithmus mit abgeleiteten Sitzungsschlüsseln für Secure Messaging nach ISO / IEC 7816-4 von der Chipkarte verifiziert. Hierbei ist eine performante Implementierung des PACE-Protokolls in der Chipkarte vorgesehen, um Zeitverzögerungen zu vermeiden. So würde zum Beispiel bei einer Ausführungszeit von zwei Sekunden und dem (durchaus üblichen) 5-maligem Verifizieren der Session-PIN ein Zeitbedarf nur für die Chipkartenberechnung von zehn Sekunden entstehen. Eine Verifikation der Session-PIN aus Sicht des Nutzerterminals 3 (zum Beispiel eines Windows-Prozesses) kann gemäß der schematischen Darstellung in Fig. 4 folgende Schritte umfassen: (400) Ausführung des PACE Protokolls mit der Session-PIN als Startwert und Ableitung der neuen Secure Messaging Schlüssel und SSC; und (410) Senden der Authentifkationsdaten, zum Beispiel Challenge in einem Challenge-Response Protokoll, wobei die Session-PIN im Zustand "verifiziert" ist und die Kommunikation gesichert und autorisiert durch Secure Messaging erfolgt, zum Beispiel mit dem Befehl "Perform Security Operation".

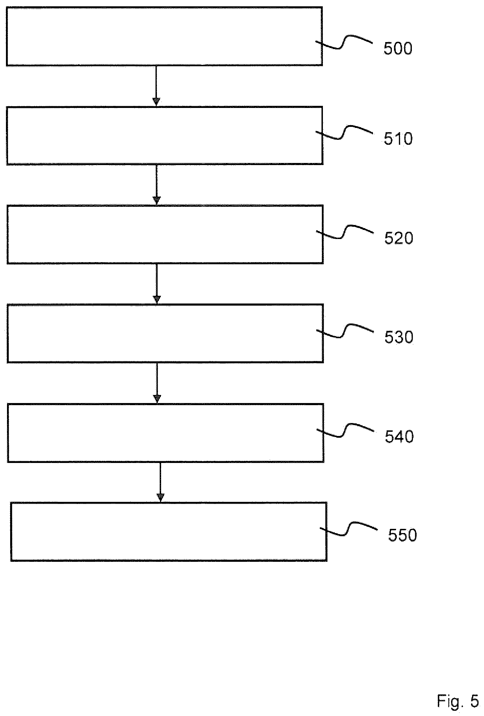

Bei einem weiteren alternativen Ausführungsbeispiel wird als Session-PIN ein symmetrischer Schlüssel erzeugt, der zur Authentisierung mittels eines Challenge-Response Protokolls mit anschließender Ableitung von Sitzungsschlüsseln für Secure Messaging nach ISO / IEC 7816-4 verwendet wird, wie es zum Beispiel im Basic Access Control Protokoll (BAC) der ICAO Verwendung findet. Eine Verifikation der Session-PIN aus Sicht des Terminals (Windows-Prozesses) umfasst gemäß der schematischen Darstellung in Fig. 5 folgende Schritte: (500) Anfordern einer Zufallszahl, zum Beispiel mittels des Kommandos "Get Challenge", (510) Verschlüsseln der Zufallszahl der Karte und der Zufallszahl des Terminals mit dem symmetrischen Schlüssel der Session-PIN und Senden zur Karte, zum Beispiel mit dem Kommando "Mutual Athenticate"; (520) Karte generiert Response, wobei Response der Karte ein Kryptogramm ist; (530) Entschlüsseln des Kryptogramms mit symmetrischen Schlüssel der Session-PIN mit Vergleich der Terminal-Zufallszahl durch das Terminal 3, (540) Ableiten der neuen Secure Messaging Schlüssel und SSC, wenn Zufallszahlen durch Karte und Terminal 3 jeweils verifiziert wurden, (550) Senden der Authentifkationsdaten, zum Beispiel Challenge in einem Challenge-Response Protokoll, wobei Session-PIN verifiziert und Kommunikation gesichert und autorisiert durch Secure Messaging ist, zum Beispiel mit dem Befehl "Perform Security Operation".

Bei einem alternativen Ausführungsbeispiel werden als Session-PIN alle oder Teile der Parameter des Secure Messaging verwendet, zum Beispiel nach ISO / IEC 7816-4. Es wird der symmetrische Schlüssel für Verschlüsselung, der symmetrische Schlüssel für die MAC-Authentisierung und optional der Send Sequence Counter (SSC) als Session-PIN verwendet. Für die Session-PIN wird der SSC des Secure Messaging von der Karte nicht ausgewertet. Eine Verifikation der Session-PIN aus Sicht des Terminals 3 (Software-Applikation, zum Beispiel Windows-Prozesses) umfasst gemäß der schematischen Darstellung in Fig. 6 im Schritt 600 das Senden der Authentifkationsdaten, zum Beispiel Challenge in einem Challenge-Response Protokoll, wobei die Session-PIN im Zustand verifiziert und die Kommunikation gesichert und autorisiert durch Secure Messaging sind, zum Beispiel mit dem Befehl "Perform Security Operation" mit Secure Messaging.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Bereitstellen und zum Nutzen einer Windows Session PIN für einen sicherheitskritischen Prozess zum Authentisieren eines Benutzers und / oder eines Datenobjekts beim Ausführen einer Software-Applikation in einer Betriebssystemumgebung in einem System mit
- einem Nutzerterminal;
- einem Hardware-Token, welcher einer Public-Key-Infrastruktur zugeordnet ist, und
- einer Kommunikationsverbindung zwischen dem Nutzerterminal und dem Hardware-Token, die eine drahtlose Kommunikationsverbindung umfasst und eingerichtet ist, einen Datenaustausch zwischen dem Nutzerterminal und dem Hardware-Token zu ermöglichen;
wobei das Verfahren in dem System die folgenden Schritte aufweist:
- Empfangen von Authentisierungsdaten eines Nutzers über eine Eingabeeinrichtung, die dem Hardware-Token zugeordnet ist;
- Verifizieren der Authentisierungsdaten des Nutzers mittels des Hardware-Tokens;
- Erzeugen einer Windows Session PIN, wenn die Authentisierungsdaten des Nutzers erfolgreich verifiziert werden;
- Speichern der Windows Session PIN in dem Hardware-Token und / oder dem Nutzerterminal; und
- Verwenden der Windows Session PIN für einen sicherheitskritischen Prozess zum Authentisieren eines Benutzers und / oder eines Datenobjekts aus der folgenden Gruppe: Nutzer-Log-in Prozess, Anmeldungen bei Web-Diensten;
wobei beim Erzeugen der Windows Session PIN zumindest einer der folgenden Erzeugungsprozesse ausgeführt wird:
a) Erzeugen eines alphanumerischen Werts als Windows Session PIN, welcher über das Password Authenticated Connection Establishment-Protokoll (PACE-Protokoll) verifizierbar ist, wobei die Windows Session PIN beim Verwenden verifiziert wird und wobei das Verifizieren das Verifizieren der Session-PIN über einen Schlüsselableitungs- und Schlüsselaustauschalgorithmus mit abgeleiteten Sitzungsschlüsseln für Secure Messaging nach ISO / IEC 7816-4 durch den Hardware-Token umfasst, wobei das Verifizieren der Session-PIN aus Sicht der Software-Applikation in der Betriebssystemumgebung folgende Schritte umfasst:
- Ausführen des Password Authenticated Connection Establishment-Protokolls mit der Session-PIN als Startwert und Ableiten neuer Secure Messaging Schlüssel und Send Sequence Counter (SSC), und
- Senden von Authentifizierungsdaten, wobei die Session-PIN im Zustand "verifiziert" ist und die Kommunikation gesichert und autorisiert durch Secure Messaging erfolgt;
b) Erzeugen eines symmetrischen Schlüssels als Windows Session PIN, welcher mittels eines Challenge-Response-Protokolls mit anschließender Ableitung von Sitzungsschlüsseln für ein Secure Messaging nach ISO / IEC 7816-4 durch den Hardware-Token verifiziert wird, wobei die Windows Session PIN beim Verwenden verifiziert wird; und
c) Bestimmen von Teilen von Parametern oder von vollständigen Parametern eines Secure Messaging nach ISO / IEC 7816-4 als Windows Session PIN, wobei die Windows Session PIN beim Verwenden verifiziert wird.

2. Verfahren nach Anspruch 1, **dadurch gekennzeichnet, dass** das Empfangen der Authentisierungsdaten des Nutzers über die Eingabeeinrichtung wenigstens einen der folgenden Schritte umfasst:
- Erfassen der Authentisierungsdaten über eine Tastatur und / oder einen biometrischen Sensor des Nutzerterminals;
- Erfassen der Authentisierungsdaten über eine Tastatur und / oder einen biometrischen Sensor eines Lesegeräts, welches dem Hardware-Token zugeordnet ist;
- Erfassen der Authentisierungsdaten über ein PIN-Pad und / oder einen biometrischen Sensor des Hardware-Tokens; und
- Erfassen der Authentisierungsdaten über eine Tastatur und / oder einen biometrischen Sensor eines mobilen Geräts.

3. Verfahren nach Anspruch 1 oder 2, **dadurch gekennzeichnet, dass** die Windows Session PIN durch das Nutzerterminal und / oder den Hardware-Token erzeugt wird.

4. Verfahren nach mindestens einem der vorangehenden Ansprüche, **dadurch gekennzeichnet, dass** das Verifizieren in Verbindung mit dem Erzeugungsprozess b) aus Sicht der Software-Applikation in der Betriebssystemumgebung weiterhin Folgendes umfasst:
- Anfordern einer Zufallszahl von dem Hardware-Token;
- Empfangen und Verschlüsseln der Zufallszahl mit einem symmetrischen Schlüssel der Windows Session PIN durch die Software-Applikation;
- Senden der verschlüsselten Zufallszahl an den Hardware-Token;
- Entschlüsseln der verschlüsselten Zufallszahl mit dem symmetrischen Schlüssel der Windows Session PIN in dem Hardware-Token;
- Ableiten von Secure Messaging Schlüsseln und Send Sequence Counter (SSC), wenn die Zufallszahl durch den Hardware-Token verifiziert wurde; und
- Senden von Authentifizierungsdaten, wobei die Windows Session PIN verifiziert und die Kommunikation mittels Secure Messaging gesichert und autorisiert sind.

5. Verfahren nach mindestens einem der vorangehenden Ansprüche, **dadurch gekennzeichnet, dass** das Verifizieren in Verbindung mit dem Erzeugungsprozess c) aus Sicht der Software-Applikation in der Betriebssystemumgebung weiterhin Folgendes umfasst: Senden von Authentifizierungsdaten, wobei die Windows Session PIN verifiziert und die Kommunikation mittels Secure Messaging gesichert und autorisiert sind.

6. Verfahren nach mindestens einem der vorangehenden Ansprüche, **dadurch gekennzeichnet, dass** als Hardware-Token eine Chipkarte verwendet wird.

7. Datenverarbeitungssystem zum Bereitstellen und zum Nutzen einer Windows Session PIN für einen sicherheitskritischen Prozess zum Authentisieren eines Benutzers und / oder eines Datenobjekts beim Ausführen einer Software-Applikation in einer Betriebssystemumgebung, mit einem Nutzerterminal; einem Hardware-Token, welcher einer Public-Key-Infrastruktur zugeordnet ist; und einer Kommunikationsverbindung zwischen dem Nutzerterminal und dem Hardware-Token, die eine drahtlose Kommunikationsverbindung umfasst und eingerichtet ist, einen Datenaustausch zwischen dem Nutzerterminal und dem Hardware-Token zu ermöglichen;
wobei das Datenverarbeitungssystem eingerichtet ist:
- Authentisierungsdaten eines Nutzers über eine Eingabeeinrichtung zu empfangen, die dem Hardware-Token zugeordnet ist;
- die Authentisierungsdaten des Nutzers mittels des Hardware-Tokens zu verifizieren;
- eine Windows Session PIN zu erzeugen, wenn die Authentisierungsdaten des Nutzers erfolgreich verifiziert werden;
- die Windows Session PIN in dem Hardware-Token und / oder dem Nutzerterminal zu speichern; und
- die Windows Session PIN für einen sicherheitskritischen Prozess zum Authentisieren eines Benutzers und / oder eines Datenobjekts aus der folgenden Gruppe zu verwenden: Nutzer-Log-in Prozess, Anmeldungen bei Web-Diensten;
wobei beim Erzeugen der Windows Session PIN zumindest einer der folgenden Erzeugungsprozesse ausführbar ist:
a) Erzeugen eines alphanumerischen Werts als Windows Session PIN, welcher über das Password Authenticated Connection Establishment-Protokoll (PACE-Protokoll) verifizierbar ist, wobei die Windows Session PIN beim Verwenden verifiziert wird und wobei das Verifizieren das Verifizieren der Session-PIN über einen Schlüsselableitungs- und Schlüsselaustauschalgorithmus mit abgeleiteten Sitzungsschlüsseln für Secure Messaging nach ISO / IEC 7816-4 durch den Hardware-Token umfasst, wobei das Verifizieren der Session-PIN aus Sicht der Software-Applikation in der Betriebssystemumgebung folgende Schritte umfasst:
- Ausführen des Password Authenticated Connection Establishment-Protokolls mit der Session-PIN als Startwert und Ableiten neuer Secure Messaging Schlüssel und Send Sequence Counter (SSC), und
- Senden von Authentifizierungsdaten, wobei die Session-PIN im Zustand "verifiziert" ist und die Kommunikation gesichert und autorisiert durch Secure Messaging erfolgt;
b) Erzeugen eines symmetrischen Schlüssels als Windows Session PIN, welcher mittels eines Challenge-Response-Protokolls mit anschließender Ableitung von Sitzungsschlüsseln für ein Secure Messaging nach ISO / IEC 7816-4 durch den Hardware-Token verifiziert wird, wobei die Windows Session PIN beim Verwenden verifiziert wird und
c) Bestimmen von Teilen von Parametern oder von vollständigen Parametern eines Secure Messaging nach ISO / IEC 7816-4 als Windows Session PIN, wobei die Windows Session PIN beim Verwenden verifiziert wird.

## Claims

1. Method for providing and using a Windows Session PIN for a security-critical process for authenticating a user and/or a data object when executing a software application in an operating system environment in a system comprising
- a user terminal;
- a hardware token which is assigned to a public key infrastructure, and
- a communication link between the user terminal and the hardware token, which communication link comprises a wireless communication link and is configured to enable a data exchange between the user terminal and the hardware token;
wherein the method comprises the following steps in the system:
- receiving authentication data of a user via an input device which is assigned to the hardware token;
- verifying the authentication data of the user by means of the hardware token;
- generating a Windows Session PIN if the authentication data of the user are successfully verified;
- storing the Windows Session PIN in the hardware token and/or the user terminal; and
- using the Windows Session PIN for a security-critical process for authenticating a user and/or a data object from the following group: user login process, logins to web services;
wherein at least one of the following generation processes is executed when generating the Windows Session PIN:
a) generating an alphanumeric value as the Windows Session PIN, which is verifiable via the Password Authenticated Connection Establishment protocol (PACE protocol), wherein the Windows Session PIN is verified when being used and wherein the verifying comprises verifying the Session PIN via a key derivation and key exchange algorithm with derived session keys for secure messaging according to ISO/IEC 7816-4 by the hardware token, wherein the verifying of the Session PIN from the point of view of the software application in the operating system environment comprises the following steps:
- executing the Password Authenticated Connection Establishment protocol with the Session PIN as a start value and deriving new secure messaging keys and send sequence counters (SSC), and
- sending authentication data, wherein the Session PIN is in the "verified" state and the communication is secured and authorized by secure messaging;
b) generating a symmetric key as the Windows Session PIN, which is verified by the hardware token by means of a challenge-response protocol with subsequent derivation of session keys for secure messaging according to ISO/IEC 7816-4, wherein the Windows Session PIN is verified when being used; and
c) determining parts of parameters or complete parameters of secure messaging according to ISO/IEC 7816-4 as the Windows Session PIN, wherein the Windows Session PIN is verified when being used.

2. Method according to Claim 1, **characterized in that** the receiving of the authentication data of the user via the input device comprises at least one of the following steps:
- acquiring the authentication data via a keyboard and/or a biometric sensor of the user terminal;
- acquiring the authentication data via a keyboard and/or a biometric sensor of a reader which is assigned to the hardware token;
- acquiring the authentication data via a PIN pad and/or a biometric sensor of the hardware token; and
- acquiring the authentication data via a keyboard and/or a biometric sensor of a mobile device.

3. Method according to Claim 1 or 2, **characterized in that** the Windows Session PIN is generated by the user terminal and/or the hardware token.

4. Method according to at least one of the preceding claims, **characterized in that** the verifying in connection with the generation process b) from the point of view of the software application in the operating system environment further comprises:
- requesting a random number from the hardware token;
- receiving and encrypting the random number with a symmetric key of the Windows Session PIN by the software application;
- sending the encrypted random number to the hardware token;
- decrypting the encrypted random number with the symmetric key of the Windows Session PIN in the hardware token;
- deriving secure messaging keys and send sequence counter (SSC) if the random number has been verified by the hardware token; and
- sending authentication data, wherein the Windows Session PIN is verified and the communication is secured and authorized by secure messaging.

5. Method according to at least one of the preceding claims, **characterized in that** the verifying in connection with the generation process c) from the point of view of the software application in the operating system environment further comprises: sending authentication data, wherein the Windows Session PIN is verified and the communication is secured and authorized by secure messaging.

6. Method according to at least one of the preceding claims, **characterized in that** a chip card is used as the hardware token.

7. Data processing system for providing and using a Windows Session PIN for a security-critical process for authenticating a user and/or a data object when executing a software application in an operating system environment, comprising a user terminal; a hardware token which is assigned to a public key infrastructure; and a communication link between the user terminal and the hardware token, which communication link comprises a wireless communication link and is configured to enable a data exchange between the user terminal and the hardware token;
wherein the data processing system is configured:
- to receive authentication data of a user via an input device which is assigned to the hardware token;
- to verify the authentication data of the user by means of the hardware token;
- to generate a Windows Session PIN if the authentication data of the user are successfully verified;
- to store the Windows Session PIN in the hardware token and/or the user terminal; and
- to use the Windows Session PIN for a security-critical process for authenticating a user and/or a data object from the following group: user login process, logins to web services;
wherein at least one of the following generation processes is executable when generating the Windows Session PIN:
a) generating an alphanumeric value as the Windows Session PIN, which is verifiable via the Password Authenticated Connection Establishment protocol (PACE protocol), wherein the Windows Session PIN is verified when being used and wherein the verifying comprises verifying the Session PIN via a key derivation and key exchange algorithm with derived session keys for secure messaging according to ISO/IEC 7816-4 by the hardware token, wherein the verifying of the Session PIN from the point of view of the software application in the operating system environment comprises the following steps:
- executing the Password Authenticated Connection Establishment protocol with the Session PIN as a start value and deriving new secure messaging keys and send sequence counter (SSC), and
- sending authentication data, wherein the Session PIN is in the "verified" state and the communication is secured and authorized by secure messaging;
b) generating a symmetric key as the Windows Session PIN, which is verified by the hardware token by means of a challenge-response protocol with subsequent derivation of session keys for secure messaging according to ISO/IEC 7816-4, wherein the Windows Session PIN is verified when being used; and
c) determining parts of parameters or complete parameters of secure messaging according to ISO/IEC 7816-4 as the Windows Session PIN, wherein the Windows Session PIN is verified when being used.

## Revendications

1. Procédé de fourniture et d'utilisation d'un code PIN de session Windows pour un processus critique de sécurité, afin d'authentifier un utilisateur et/ou un objet de données lors de l'exécution d'une application logicielle dans un environnement de système d'exploitation comprenant :
- un terminal d'utilisateur ;
- un jeton matériel, qui est associé à une infrastructure à clés publiques ; et
- une liaison de communication entre le terminal d'utilisateur et le jeton matériel, qui comprend une liaison de communication sans fil et est configurée pour permettre un échange de données entre le terminal d'utilisateur et le jeton matériel ;
dans lequel le procédé dans le système comprend les étapes suivantes :
- la réception des données d'authentification d'un utilisateur via un dispositif d'entrée, qui est associé au jeton matériel ;
- la vérification des données d'authentification de l'utilisateur au moyen du jeton matériel ;
- la génération d'un code PIN de session Windows, lorsque la vérification des données d'authentification de l'utilisateur a réussi ;
- la mémorisation du code PIN de session Windows dans le jeton matériel et/ou le terminal d'utilisateur ;
- l'utilisation du code PIN de session Windows pour un processus critique de sécurité, afin d'authentifier un utilisateur et/ou un objet de données appartenant au groupe suivant : processus de connexion d'utilisateur, connexions aux services Web, dans lequel lors de la génération du code PIN de session Windows au moins un des processus de génération suivants est exécuté :
a) la génération d'une valeur alphanumérique comme code PIN de session Windows, qui est vérifiable via le protocole PACE (Password Authenticated Connection Establishment), dans lequel le code PIN de session Windows est vérifié lors de son utilisation et dans lequel la vérification comprend la vérification du code PIN de session par un jeton matériel au moyen d'un algorithme de dérivation de clés et d'échange de clés avec des clés de session dérivées pour la messagerie sécurisée, conformément à la norme ISO/IEC 7816-4, dans lequel la vérification du code PIN de session du point de vue de l'application logicielle dans l'environnement de système d'exploitation comprend les étapes suivantes :
- l'exécution du protocole PACE avec le code PIN de session comme valeur initiale et la dérivation de nouvelles clés de messagerie sécurisée et de compteurs de séquence d'envoi (SSC) et
- l'envoi des données d'authentification, dans lequel le code PIN de session est alors à l'état « vérifié » et la communication est sécurisée et autorisée par la messagerie sécurisée ;
b) la génération d'une clé symétrique servant de code PIN de session Windows, qui est vérifiée par le jeton matériel au moyen d'un protocole de défi-réponse avec dérivation ultérieure des clés de session pour une messagerie sécurisée conformément à la norme ISO/IEC 7816-4,
dans lequel le code PIN de session Windows est vérifié lors de son utilisation ; et
c) la détermination de paramètres partiels ou complets d'une messagerie sécurisée conformément à la norme ISO/IEC 7816-4 en tant que code PIN de session Windows, dans lequel le code PIN de session Windows est vérifié lors de son utilisation.

2. Procédé selon la revendication 1, **caractérisé en ce que** la réception des données d'authentification de l'utilisateur via le dispositif d'entrée comprend au moins une des étapes suivantes :
- la capture des données d'authentification via un clavier et/ou un capteur biométrique du terminal d'utilisateur ;
- la capture des données d'authentification via un clavier et/ou un capteur biométrique d'un lecteur, qui est associé au jeton matériel ;
- la capture des données d'authentification via un clavier Pinpad et/ou un capteur biométrique du jeton matériel ; et
- le capture des données d'authentification via un clavier et/ou un capteur biométrique d'un appareil mobile.

3. Procédé selon la revendication 1 ou 2, **caractérisé en ce que** le code PIN de session Windows est généré par le terminal d'utilisateur et/ou le jeton matériel.

4. Procédé selon au moins une des revendications précédentes, **caractérisé en ce que** la vérification liée au processus de génération b) du point de vue de l'application logicielle dans l'environnement de système d'exploitation comprend en outre les étapes suivantes :
- la demande d'un nombre aléatoire au jeton matériel ;
- la réception et le chiffrement du nombre aléatoire avec une clé symétrique du code PIN de session Windows par l'application logicielle ;
- l'envoi du nombre aléatoire chiffré au jeton matériel ;
- le déchiffrement du nombre aléatoire chiffré avec la clé symétrique du code PIN de session Windows dans le jeton matériel ;
- la dérivation des clés de messagerie sécurisée et des compteurs de séquence d'envoi (SSC) lorsque le nombre aléatoire a été vérifié par le jeton matériel ; et
- l'envoi de données d'authentification, dans lequel le code PIN de session Windows est vérifié et la communication est sécurisée et autorisée par messagerie sécurisée.

5. Procédé selon au moins une des revendications précédentes, **caractérisé en ce que** la vérification liée au processus de génération c) du point de vue de l'application logicielle dans l'environnement de système d'exploitation, comprend en outre les éléments suivants : l'envoi de données d'authentification, dans lequel le code PIN de session Windows est vérifié et la communication est sécurisée et autorisée au moyen de la messagerie sécurisée.

6. Procédé selon au moins une des revendications précédentes, **caractérisé en ce qu'**une carte à puce est utilisée comme jeton matériel.

7. Système de traitement de données pour la fourniture et l'utilisation d'un code PIN de session Windows pour un processus critique de sécurité pour l'authentification d'un utilisateur et/ou d'un objet de données lors de l'exécution d'une application logicielle dans un environnement de système d'exploitation, comportant un terminal d'utilisateur ; un jeton matériel, qui est associé à une infrastructure à clés publiques ; et une liaison de communication entre le terminal d'utilisateur et le jeton matériel, qui comprend une liaison de communication sans fil et est configurée pour permettre un échange de données entre le terminal d'utilisateur et le jeton matériel ;
dans lequel le système de traitement de données est configuré pour :
- recevoir les données d'authentification d'un utilisateur via un dispositif d'entrée, qui est associé au jeton matériel ;
- vérifier les données d'authentification de l'utilisateur au moyen du jeton matériel ;
- générer un code PIN de session Windows, lorsque la vérification des données d'authentification de l'utilisateur a réussi ;
- mémoriser le code PIN de session Windows dans le jeton matériel et/ou le terminal d'utilisateur ; et
- utiliser le code PIN de session Windows pour un processus critique de sécurité afin d'authentifier un utilisateur et/ou un objet de données appartenant au groupe suivant : processus de connexion d'utilisateur, connexions aux services Web,
dans lequel lors de la génération du code PIN de session Windows au moins un des processus de génération suivants est exécuté :
a) la génération d'une valeur alphanumérique comme code PIN de session Windows, qui est vérifiable via le protocole PACE (Password Authenticated Connection Establishment), dans lequel le code PIN de session Windows est vérifié lors de son utilisation et dans lequel la vérification comprend la vérification du code PIN de session par un jeton matériel au moyen d'un algorithme de dérivation de clés et d'échange de clés avec des clés de session dérivées pour la messagerie sécurisée, conformément à la norme ISO/IEC 7816-4, dans lequel la vérification du code PIN de session du point de vue de l'application logicielle dans l'environnement de système d'exploitation comprend les étapes suivantes :
- l'exécution du protocole PACE avec le code PIN de session comme valeur initiale et la dérivation de nouvelles clés de messagerie sécurisée et de compteurs de séquence d'envoi (SSC) et
- l'envoi des données d'authentification, dans lequel le code PIN de session est alors à l'état « vérifié » et la communication est sécurisée et autorisée par la messagerie sécurisée ;
b) la génération d'une clé symétrique servant de code PIN de session Windows, qui est vérifiée par le jeton matériel au moyen d'un protocole de défi-réponse avec dérivation ultérieure des clés de session pour une messagerie sécurisée conformément à la norme ISO/IEC 7816-4,
dans lequel le code PIN de session Windows est vérifié lors de son utilisation et
c) la détermination de paramètres partiels ou complets d'une messagerie sécurisée conformément à la norme ISO/IEC 7816-4 en tant que code PIN de session Windows, dans lequel le code PIN de session Windows est vérifié lors de son utilisation.
